(19) **Europäisches Patentamt**

**European Patent Office**

**Office européen des brevets**

(11) **EP 0 968 407 B1**

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(51) Int Cl.[7]: **G01L 21/12**

(21) Anmeldenummer: **98922623.8**

(22) Anmeldetag: **19.03.1998**

(86) Internationale Anmeldenummer:
**PCT/EP98/01621**

(87) Internationale Veröffentlichungsnummer:
**WO 98/43058 (01.10.1998 Gazette 1998/39)**

(54) **FOLIENMANOMETER**

FOIL MANOMETER

MANOMETRE A FEUILLE

(84) Benannte Vertragsstaaten:
**AT BE CH DE DK ES FI FR GB GR IE IT LI LU MC NL PT SE**

(30) Priorität: **21.03.1997 DE 19711874**

(43) Veröffentlichungstag der Anmeldung:
**05.01.2000 Patentblatt 2000/01**

(73) Patentinhaber: **Max-Planck-Gesellschaft zur Förderung der Wissenschaften e.V. 80539 München (DE)**

(72) Erfinder:
• **MAST, Karl-Friedrich D-85748 Garching (DE)**

• **SCHRAMM, Gerold D-82194 Gröbenzell (DE)**
• **MÜNCH, Martin D-80805 München (DE)**

(74) Vertreter: **Hertz, Oliver, Dr. v. Bezold & Partner, Patentanwälte Akademiestrasse 7 80799 München (DE)**

(56) Entgegenhaltungen:
**DE-A- 4 308 434        DE-A- 4 310 324 US-A- 5 557 972**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Druckmeßvorrichtung, die als Wärmeleitungsmanometer betrieben wird, und Verfahren zur Druckmessung mit einer derartigen Druckmeßvorrichtung.

Die spezifische Wärmeleitfahigkeit eines Gases ist bei niedrigen Drucken, wenn die mittlere freie Weglänge in die Größenordnung der Gefäßdimensionen kommt, abhängig vom Gasdruck, was beim Wärmeleitungsmanometer zur Druckmessung genutzt wird. Im einfachsten Fall umfaßt ein Wärmeleitungsmanometer einen freitragenden Widerstandsdraht in einem zu messenden Gas. Der Widerstandsdraht wird mit einer konstanten elektrischen Leistung geheizt. Sobald die mittlere freie Weglänge der Gasteilchen in die Größenordnung des Drahtdurchmessers kommt, wird die Wärmeleitfähigkeit des Gases druckabhangig. Mit abnehmendem Druck sinkt der durch das Gas abgeleitete Wärmestrom, so daß bei konstanter Heizleistung die Drahttemperatur druckabhängig ist. Unterhalb eines unteren Grenzdrukkes ist die Wärmeableitung durch das Gas gegenüber der Wärmeableitung durch die Zuleitungen bzw. durch Wärmestrahlung zu vernachlässigen, so daß der abgeleitete Wärmestrom druckunabhängig und somit die Temperatur des Widerstandsdrahtes konstant ist.

Die Drahttemperatur läßt sich aus dem Widerstandswert des Drahtes ermitteln. Beïm Pirani-Manometer wird der Widerstandswert mit einer Wheatstone-Brückenschaltung gemessen, bei der ein Widerstand durch den Meßwiderstandsdraht gebildet wird und ein Referenzwiderstand, der die gleiche Bauart wie der Meßwiderstandsdraht besitzt, unter konstantem Druck betrieben wird.

Wärmeleitungsmanometer, die als Pirani-Manometer aufgebaut sind, besitzen generell die folgenden Nachteile. Die Widerstandsdrähte, die zur Erzielung eines möglichst hohen Einsatzdruckes (s. oben) mit einem möglichst geringen Durchmesser ausgebildet werden, bestehen in der Regel aus einem Material relativ hohen Widerstands (z. B. Wolfram oder Molybdän). Hochohmige Widerstandsmaterialien erlauben nur den Betrieb der Meßbrückenschaltung mit Gleichstrom. Ferner steigt die Anfälligkeit gegenüber elektromagnetischen Störfeldern, was insbesondere bei plasmaphysikalischen Experimenten nachteilig isc. Daher ist die Genauigkeit der bekannten Pirani-Manometer beschränkt. Ferner ist der Manometeraufbau mit freitragenden Widerstandsdrähten gegen mechanische Beanspruchung und gegen Rezipiencenbelüftungen empfindlich. Schließlich ist mit bekannten Pirani-Manometern bislang kein kompakter Aufbau realisiert worden, so daß sich der Einsatz dieser Manometer in der Regel auf unspezifische Druckmessungen beim Betrieb von Vakuumanlagen beschränkt.

Weitere Wärmeleitungsmanometer, die beispielsweise aus US 5,557,972, DE-OS 43 10 324 und DE-OS 44 14 349 bekannt sind, enthalten einen Meßwiderstand, der anstelle der oben genannten Drahtform eine flächige Schichtform besitzt. Diese Widerstandsmanometer besitzen zwar eine erhöhte Empfindlichkeit, sind jedoch in Bezug auf das dynamische Verhalten und die mechanische Stabilität nachteilig. Zur Erzielung einer hohen Empfindlichkeit sind nämlich Vorkehrungen zur thermischen Entkopplung des Meßwiderstands vom übrigen Manometer vorgesehen. Dies ergibt jedoch verhältnismäßig lange Zeiten zur Einstellung des thermischen Gleichgewichts zwischen dem zu messenden Gas und dem Meßwiderstand, so daß Druckänderungen nicht erfaßt werden können, die schneller als die Zeit zur Einstellung des thermischen Gleichgewichts sind. Da bei den herkömmlichen Wärmeleitungsmanometern der Meßwiderstand auf mit halbleitertechnologischen Mitteln hergestellten Halbleitermembranen vorgesehen ist (Dicke des Meßwiderstands und der Trägermembran ~ 1 μm), ergibt sich eine außerordentliche mechanische Empfindlichkeit. Daher sind die Bauformen herkömmlicher Wärmeleitungsmanometer mit schichtförmigem Meßwiderstand auf miniaturisierte Sensoren beschrankt. Dies führt wiederum zu einer Reduzierung der Empfindlichkeit bei der Druckmessung.

In DE-OS 43 08 434 ist eine elektronische Schaltung zur Temperaturkompensation bei einem geregelten Wärmeleitungsmanometer beschrieben.

Aufgabe der Erfindung ist es, eine verbesserte Druckmeßvorrichtung auf der Grundlage des Wärmeleitungsprinzips anzugeben, die einen erweiterten Einsatzbereich besitzt und insbesondere kompakt und störunanfällig aufgebaut ist und mit hoher Genauigkeit betrieben werden kann.

Diese Aufgabe wird durch eine Druckmeßvorrichtung mit den Merkmalen gemäß Patentanspruch 1 gelöst. Vorteilhafte Ausführungsformen der Erfindung ergeben sich aus den abhängigen Ansprüchen.

Die Erfindung basiert auf der Idee, bei einer Druckmeßvorrichtung auf der Grundlage des Wärmeleitungsprinzips im Gegensatz zu herkömmlichen Strukturen zu einem Schichtaufbau überzugehen, bei dem mindestens ein Meßwiderstand und eine Wärmeleitschicht schichtförmig auf einer Trägerfolie angeordnet sind.

Die Wärmeleitschicht ist mit einer als Wärmebad (hohe Wärmekapazität) wirkenden Wärmekontaktschicht verbunden und dient somit einer vorbestimmten thermischen Kopplung des Meßwiderstands mit der übrigen Druckmeßvorrichtung. Im Unterschied zu herkömmlichen Wärmeleitungsmanometern wird somit erfindungsgemäß mit der Wärmeleitschicht ein Mittel zur Bereitstellung einer definierten Wärmeableitung vom Meßwiderstand geschaffen. Die Wärmeleitschicht kann auch Teil der Trägerfolie sein, falls diese eine genügende Wärmeleitung vergleichbar mit der Wärmeleitung von Gold besitzt.

Der erfindungsgemäße Aufbau erlaubt erstmalig eine Beschleunigung der Einstellung des thermischen Gleichgewichts des Meßwiderstands, eine Verkürzung der Ansprechzeit und damit die Möglichkeit, extrem schnelle Druckänderungen (Größenordnung kHz-Bereich) zu erfassen.

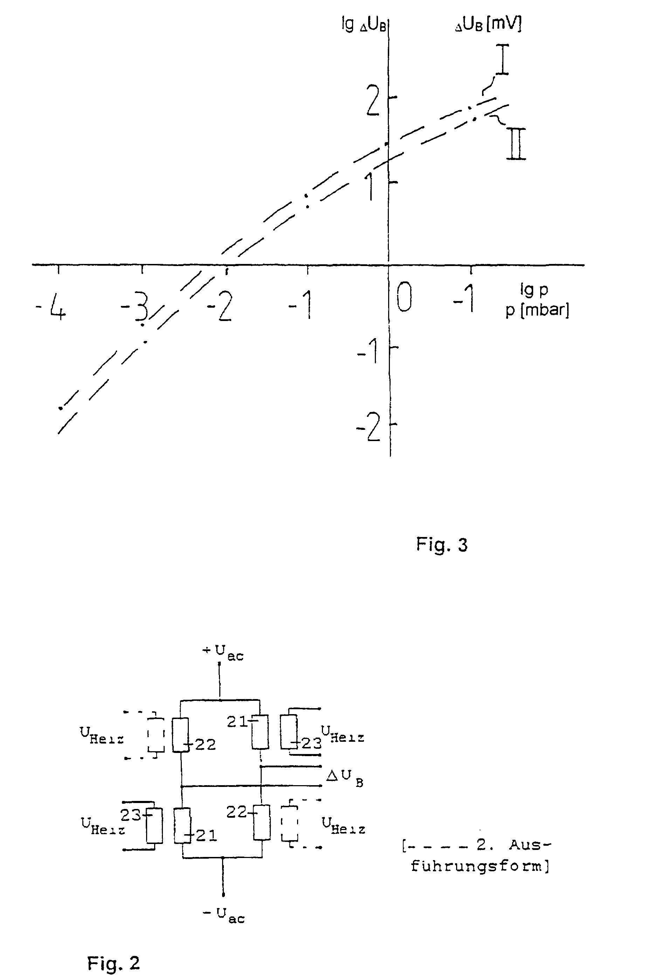

Ein weiterer Vorteil der Anbringung einer Wärmeleitschicht besteht in der Möglichkeit zum Feedback-Betrieb der Druckmeßvorrichtung. Feedback-Betrieb, dessen Einzelheiten unten unter Bezug auf Fig. 2 erläutert werden, bedeutet, daß der Meßwiderstand durch direkte oder indirekte Heizung in definierter Weise verändert wird, z.B. auf eine konstante Temperatur gebracht wird. Da die erforderliche Heizleistung von der Wärmeableitung und somit vom Druck des Mediums abhangt, kann der aktuelle Druckwert unmittelbar aus der Heizleistung ermittelt werden. Das Temperaturgleichgewicht des Meßwiderstands unter Wirkung einer Wärmequelle (ggf. zusätzlicher Heizwiderstand) und der als Wärmesenke wirkenden Wärmeleitschicht ist in einem gewünschten Temperaturbereich mit hoher Geschwindigkeit einstellbar.

Die Wärmeleitschicht wird, ggf. unter Anbringung einer Absorberschicht und/oder einer Oberflächenstrukturierung, und die Meßwiderstände bzw. die Trägerfolie werden so dimensioniert, daß der Wärmestrom vom Meßwiderstand zum Medium die Schichten im wesentlichen senkrecht durchsetzt. Die Anbringung der Wärmeleitschicht erlaubt eine definierte Einstellung eines Temperaturgradienten zwischen dem Meßwiderstand und dem zu messenden Medium. Gemäß einer bevorzugten Ausführungsform der Erfindung wird der Meßwiderstand auf der einen Seite der Trägerfolie und die Wärmeleitschicht auf der gegenüberliegenden Seite der Trägerfclie in einem dem Meßwiderstand entsprechenden Bereich vorgesehen. Es sind jedoch auch andere Schichtfolgen möglich, die einen im wesentlichen senkrechten Wärmestrom vom Meßwiderstand durch die Wärmeleitschicht zum Medium erlauben, so daß die Empfindlichkeit bzw. Ansprechzeit der Druckmeßvorrichtung vorbestimmt ist. Auf der der Trägerfolie entgegengesetzten Seite kann der Meßwiderstand in direkter Berührung mit dem Medium stehen oder eine Absorberschicht (ein- oder zweischichtig) tragen.

Die erfindungsgemäße Druckvorrichtung wird vorzugsweise wie ein Pirani-Manometer mit einer Bruckenschaltung betrieben. Gemäß einer ersten Ausführungsform sind der Meßwiderstand und ein Referenzwiderstand gleichen Aufbaus voneinander beabstandet auf der Trägerfolie vorgesehen, wobei die Trägerfolie in einem gut wärmeleitenden Block angeordnet ist, der in dem Bereich, in dem der Meßwiderstand auf der Trägerfolie angeordnet ist, eine Ausnehmung zur Aufnahme des zu messenden Mediums besitzt, und den Bereich der Trägerfolie, in dem der Referenzwiderstand angeordnet ist, formschlüssig umschließt. Dadurch ist der Referenzwiderstand vollständig an ein Wärmebad (unendlich hohe Wärmekapazität) angeschlossen, so daß am Referenzwiderstand keine druckabhängigen Temperaturänderungen auftreten können.

Bei einer zweiten Ausführungsform der Erfindung ist der erlauterte Aufbau dahingehend abgewandelt, daß der Referenzwiderstand wie der Meßwiderstand auf einem freitragenden Bereich der Trägerfolie angeordnet ist. In diesem Fall wird der Referenzwiderstand nicht von einem Wärmebad umschlossen, sondern mit dem zu messenden Medium in Wärmekontakt gebracht. Die Druckmeßvorrichtung enthält ein Sensorteil mit einem Schichtaufbau aus Trägerfolie, Meßwiderstand und Wärmeleitschicht, wie dies oben beschrieben wurde, und ein Referenzteil ebenfalls mit einem Schichtaufbau aus einem Referenzwiderstand, der Tragerfolie und einer Wärmeleitschicht. Die Sensor- und Referenzteile besitzen vorzugsweise den gleichen geometrischen Aufbau, wobei jedoch die Dicken der jeweiligen Wärmeleitschichten unterschiedlich sind. Im folgenden wird deshalb in Zusammenhang mit der zweiten Ausführungsform zwischen einer Sensorwarmeleitschicht und einer Referenzwärmeleitschicht unterschieden. Die Referenzwärmeleitschicht ist vorzugsweise dicker (Faktor z.B. - 4...5) als die Sensorwärmeleitschicht. Gemäß einer bevorzugten Gestaltung kann vorgesehen sein, daß sowohl der Meßwiderstand einen separaten Heizwiderstand (Sensorheizwiderstand) als auch der Referenzwiderstand einen separaten Heizwiderstand (Referenzheizwiderstand) trägt.

Die erfindungsgemäße Druckmeßvorrichtung ermöglicht einen Manometeraufbau mit erhöhter mechanischer Stabilität. Dies ergibt sich aus den Vorkehrungen zur Verbesserung der thermischen Kopplung des Meß- oder Referenzwiderstands zur Umgebung. Dadurch kann ein neuer Aufbau mit stabilen Trägerfolien erzielt werden, die auch bei Belüftungsvorgängen genügend robust sind und im Vergleich zu herkömmlichen Widerstandsmanometern mit Schichtaufbau eine Vergrößerung der Sensorfläche zulassen. Damit wird wiederum die Empfindlichkeit der Druckmeßvorrichtung gesteigert.

Der erfindungsgemäße Schichtaufbau ermöglicht jedoch auch eine Miniaturisierung des druckempfindlichen Sensorteils der Druckmeßvorrichtung. Gemäß einer weiteren Ausführungsform der Erfindung sind daher eine Vielzahl von Druckmeßvorrichtungen matrixartig in einem Wärmeleitungsmanometer angeordnet, das zur ortsauflösenden Druckmessung eingerichtet ist.

Bei einer vorteilhaften Anwendung der erfindungsgemäßen Vorrichtung werden Druckprofile in einem Medium mit einer Vielzahl von linear oder flächig angeordneten Drucksensoren erfaßt, die in dem interessierenden Bereich beispielsweise eines Rezipienten angeordnet und zur gleichzeitigen Erfassung der Druckwerte von allen Drucksensoren eingerichtet sind.

Einzelheiten der Erfindung werden im folgenden unter Bezug auf die beigefügten Zeichnungen beschrieben. Es zeigen:

Fig. 1      eine schematische Schnittansicht der ersten Ausführungsform der erfindungsgemäßen Druckmeßvorrichtung;

Fig. 2    ein Prinzipschaltbild zur Erläuterung der Brückenschaltung, mit der erfindungsgemäße Druckmeßvorrichtungen betrieben werden;

Fig. 3    eine Kurvendarstellung der Brückenausgangsspannung in Abhängigkeit vom Druck;

Fig. 4    eine schematische Ansicht der Vorderseite einer Trägerfolie eines erfindungsgemäßen Wärmeleitungsmanometers mit einer Vielzahl von Drucksensoren;

Fig. 5    eine schematische Ansicht der Rückseite einer Trägerfolie eines Wärmeleitungsmanometers gemäß Fig. 3;

Fig. 6    eine vergrößerte Ansicht eines Meßwiderstands mit Mäanderstruktur;

Fig. 7    schematische Schnittansichten (A-D) zur Illustration verschiedener Strukturierungsformen der Wärmeleitschicht; und

Fig. 8    eine schematische Schnittansicht der zweiten Ausführungsform der erfindungsgemäßen Druckmeßvorrichtung.

## 1. Ausführungsform

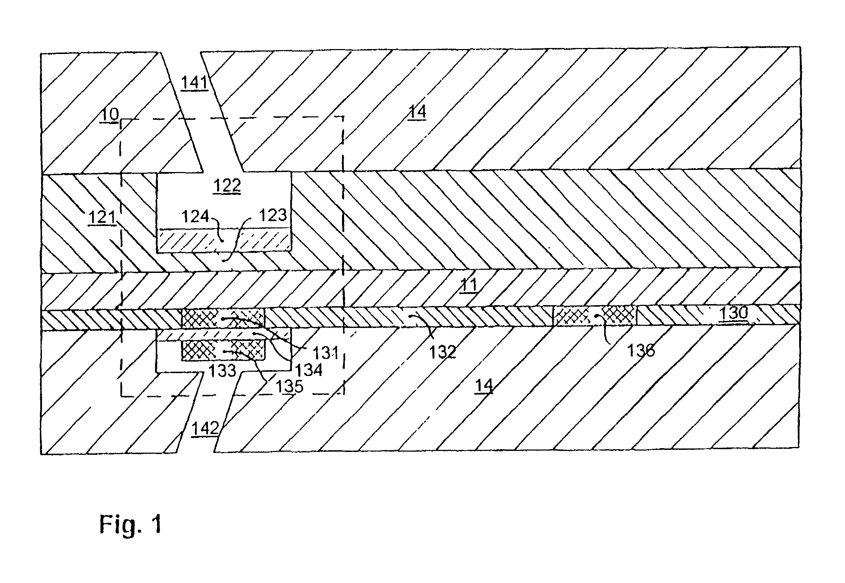

Fig. 1 zeigt schematisch einen Querschnitt durch die erste Ausführungsform der erfindungsgemäßen Druckmeßvorrichtung. Diese Darstellung ist aus Übersichtlichkeitsgrunden nicht maßstäblich gezeichnet. Im folgenden wird die in Fig. 1 gezeigte obere Seite der Druckmeßvorrichtung bzw. der einzelnen schichtförmigen Komponenten als deren Vorderseite und die untere Seite als Rückseite bezeichnet. Dies ist eine willkurliche Benennung, die keinerlei Beschränkung hinsichtlich der Anordnung bestimmter Teile der erfindungsgemäßen Meßvorrichtung an der Vorder- oder Ruckseite darstellt. Es ist dem Fachmann insbesondere ersichtlich, daß die Vorderseite im Betriebszustand eine bezuglich des Rezipienteninneren beliebig orientierte Seite eines Manometers sein kann.

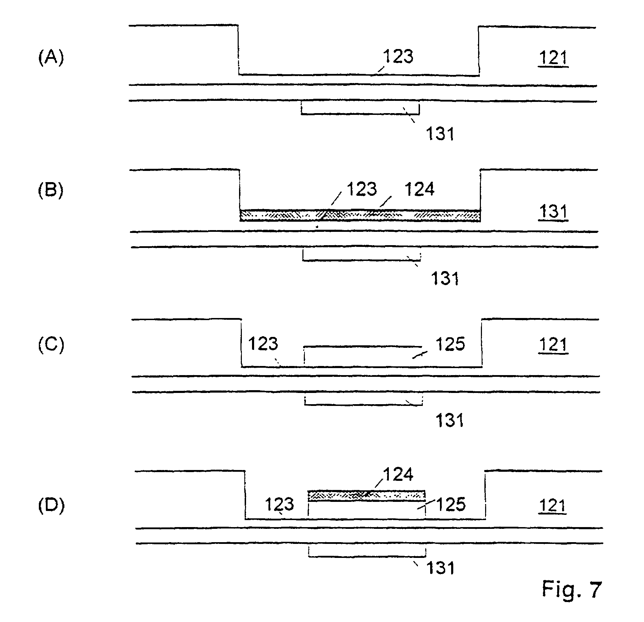

Die erfindungsgemäße Druckmeßvorrichtung enthält ein Sensorteil 10 (gestrichelt umrahmt) . Das Sensorteil 10 umfaßt eine freitragende Trägerfolie 11, auf deren Vorderseite eine Wärmekontaktschicht 121 und auf deren Rückseite eine Widerstands- und Leitungsschicht 130 mit einem Meßwiderstand 131 angebracht sind. In einem Bereich, der im wesentlichen mittig der Position des Meßwiderstands 131 gegenüberliegt, besitzt die Wärmekontaktschicht 121 eine Ausnehmung 122, über deren Ausdehnung die Wärmekontaktschicht 121 auf eine dünnere Wärmeleitschicht 123 mit einer vorbestimmten Dicke verjüngt ist. In der Ausnehmung 122 ist ferner auf der Vorderseite der Wärmeleitschicht 123 eine Absorberschicht 124 vorgesehen, die in Kontakt mit dem zu messenden Medium steht. Die Anbringung der Absorberschicht ist nicht zwingend erforderlich. Eine erfindungsgemäße Druckmeßvorrichtung kann auch so aufgebaut sein, daß ausschließlich die Wärmeleitschicht am Boden der Ausnehmung in Verbindung der sich seitlich anschließenden Wärmekontaktschicht 121 ohne eine Absorberschicht vorgesehen ist. Die Gestaltungsmöglichkeiten der Wärmeleitschicht werden unten unter Bezug auf die Fign. 7A-7D beschrieben. Auf der Rückseite der Tragerfolie 11 befinden sich neben dem schichtförmigen Meßwiderstand 131 schichtförmig angeordnete Leitungen 132.

Der Schichtaufbau bestehend aus der Tragerfolie 11 und den darauf angebrachten Wärmekontakt- bzw. Wärmeleitschichten 121, 123 und Meßwiderstands- und Leitungsschicht 130, 131 ist von einem Gehäuse 14 (grob schraffiert) eingefaßt. Das Gehäuse 14 besitzt auf der Vorderseite einen Gasdurchlaß- oder Belüftungskanal 141, über den das zu messende Medium in die Ausnehmung 122 eintreten kann. Auf der Rückseite besitzt das Gehäuse 14 im wesentlichen im Bereich der Ausdehnung des Meßwiderstands 131 eine Ausnehmung 133, deren Ausmaße (insbesondere parallel zu den Schichtebenen) denen der Ausnehmung 122 entsprechen. Über einen weiteren Belüftungskanal 142 wird dem zu messenden Medium ermöglicht, auch in den Bereich der Rückseite des Sensorteils 10 einzutreten. Damit wird in vorteilhafter Weise die mechanische Belastung des Sensorteils vermindert. Die Belüftungskanäle 141, 142 sind gegenüber einer Bezugslinie, die senkrecht auf der Ebene der Trägerfolie 11 steht, geneigt angeordnet. Damit wird eine Abschirmung des Sensorteils gegen elektromagnetische Strahlung (insbesondere Wärmestrahlung) erzielt. Gemäß einer besonderen Gestaltung der Druckmeßvorrichtung kann die Ausnehmung auf der Rückseite der Tragerfolie auch weggelassen werden (s. unten).

Die Gestaltung der Druckmeßvorrichtung auf der Rückseite der Trägerfolie mit dem Meßwiderstand und der Ausnehmung zum Druckausgleich kann entsprechend einer der folgenden Formen ausgewählt werden. Entsprechend einem ersten Beispiel steht der Trägerfolienbereich mit dem Meßwiderstand freiliegend direkt in Kontakt mit dem zu messenden Arbeitsgas. Eine Verbesserung des Wärmekontakts wird durch Anbringung einer Absorberschicht (nicht dargestellt) auf dem Meßwiderstand erhalten. Ist die Absorberschicht elektrisch isolierend, so bedeckt sie direkt die maanderförmig angeordneten Meßwiderstände und die dazwischenliegenden freien Flächen der Trägerfolie. Ist die Absorberschicht elektrisch leitend, so ist zwischen den Meßwiderständen und der Absorberschicht eine elektrisch isolierende Isolationsschicht vorgesehen. Gemäß einem weiteren Beispiel (in Fig. 1 dargestellt) ist auf den Meßwiderständen eine Isolationsschicht 134 und ein Heizwiderstand 135 vorgesehen, dessen Funktion unten erläutert wird.

Das Gehäuse 14 besteht aus gut wärmeleitendem Material. Mit dem Gehäuse 14 wird der gesamte Schichtaufbau, der von der Trägerfolie 11 getragen wird, fest eingespannt. Im Bereich des Meßwiderstands 131 und der Wärmeleitschicht 123 ist der Schichtaufbau freitragend. Der Wärmetransport vom elektrisch geheizten Meßwiderstand 131 erfolgt in vorbestimmter Weise im wesentlichen über die Wärmeleitschicht 123 zum Gehäuse und zu dem die Anordnung umgebenden Medium, dessen Druck p gemessen werden soll. Das Medium wird durch ein Gas mit einem Druck unterhalb des atmosphärischen Drucks gebildet. Bei Druckabhängigkeit des Wärmetransports durch das Gas wird der Meßwiderstand 131 auf die Temperatur T(p) aufgeheizt. Aufgrund des Temperaturkoeffzienten des Meßwiderstands ist dessen Widerstandswert R(p) ebenfalls druckabhängig.

Gemäß Fig. 1 ist jeder Referenzwiderstand 136 in derselben Ebene wie der Meßwiderstand 131 und die Verbindungsleiter 132 angeordnet, ohne jedoch in Wärmekontakt mit dem zu messenden Gas zu stehen. Der Referenzwiderstand 136 steht vielmehr durch ganzflächige Pressung in engem Wärmekontakt mit dem Gehäuse 14 und ist dabei gegen elektromagnetische Strahlung und Gasteilchen vollständig abgeschirmt. Dadurch ist die Temperatur des elektrisch geheizten Referenzwiderstandes 136 identisch zur Gehäusetemperatur (Wärmebad) und druckunabhängig.

Der Wärmetransport vom Meßwiderstand 131 über die Trägerfolie 11 und die Wärmeleitschicht 123, die auch beide als eine gemeinsame Wärmeleitschicht aufgefaßt werden können, wird unter Annahme vorbestimmter geometrischer Parameter wie folgt beschrieben. Die geometrischen Parameter umfassen insbesondere die Dicke $d_{11}$ der Trägerfolie 11, die Dicke $d_{123}$ der Wärmeleitschicht 123 und die Seitenlangen a und b der Fläche der Wärmeleitschicht 123 (bzw. der Grundfläche der Ausnehmung 122). Nach Anlegen eines stufenförmigen Druckpulses an das zu messende Medium ergibt sich eine Zeitabhängigkeit der Temperatur der Wärmeleitschicht gemäß:

$$\langle T\rangle(t) \sim \frac{f(p_0)}{F\langle K\rangle} \cdot \sum_m \sum_n \frac{1}{(mn)^2} \cdot \frac{1}{\lambda_{mn}} \cdot \left(1 - e^{-\lambda_{mn} \cdot \frac{\langle K\rangle}{\langle c\rangle} \cdot t}\right)$$

Dabei sind $f(p_0)$ die kalibrierbare Kühlleistung bei einem Bezugsdruck $p_0$, $\langle K\rangle$ der genuttelte Wärmeleitkoeffizient der Trägerfolie 11 und der Wärmeleitschicht 123, $\langle c\rangle$ die gemittelte spezifische Wärmekapazität der Trägerfolie 11 und der Wärmeleitschicht 123 und $\langle T\rangle(t)$ die über die Fläche der Wärmeleitschicht gemittelte Temperatur. Die Indizes n, m sind naturliche, ungerade Zahlen, die die sogenannten Moden der Wärmeleitung bezeichnen. Die Größe $\lambda_{mn}$ ist gemäß

$$\lambda_{mn} = \pi^2 [(m/a)^2 + (n/b)^2]$$

von den Seitenlängen a, b der Warmeleitschicht 123 abhangig. Die Zeitkonstante

$$\tau_{mn} = (1/\lambda_{mn}) \cdot (\langle c\rangle/\langle\kappa\rangle)$$

für bestimmte Modenzahlen m, n hängt somit von der Wärmeleitung, von der spezifischen Wärmekapazität und der Geometrie der Wärmeleitschicht (mit der Trägerfolie) ab. Über diese Größen kann somit die gewünschte Zeitkonstante des Wärmestromes zwischen dem Meßwiderstand 131 und dem zu messenden Medium eingestellt werden. Typische Zeitkonstanten $\tau_{11}$ liegen im Bereich von 1 ms bis einige 100 ms und betragen beispielsweise bei Seitenlängen $a = 0.1$ cm, $b = 0.3$ cm und einer Dicke der Trägerfolie von $d_{11} = 10 \cdot 10^{-6}$m für verschiedene Dicken der Wärmeleitschicht $d_{123}$ die folgenden Werte:

$$d_{123} = 1\ \mu m:\ \tau_{11} = 5.4 \cdot 10^{-3}\ s;$$

$$d_{11} = 0.1\ \mu m:\ \tau_{11} = 38.9 \cdot 10^{-3}\ s;$$

und

$$d_{11} = 10 \ \mu m: \tau_{11} = 1.2 \cdot 10^{-3} \ s.$$

Bei einer homogenen Wärmeleitschicht klingen die Moden mit höheren Werten m, n schnell ab, so betragen beispielsweise die Moden m = 1, n = 3 (oder umgekehrt) nur noch ~ 15 % der Grundmode.

Die thermischen Eigenschaften werden bei Anbringung einer Warmeausgleichsschicht oder einer Absorberschicht komplizierter. Die Einstellung bestimmter Parameter erfolgt dann unter Verwendung verfügbarer numerischer Simulationsmethoden zur Wärmeleitung an festen Körpern. Die Dicke einer Wärmeausgleichsschicht wird in der Regel größer als die Dicke der Wärmeleitschicht 123 gewählt (typischer Faktor: 50 ... 100).

Die Erfassung des temperaturabhängigen Widerstandswertes R(p) erfolgt vorzugsweise wie bei einem Pirani-Manometer mit einer Bruckenschaltung (s. Fig. 2), die jeweils zwei Meßwiderstände 21 (entsprechend 131) und zwei Referenzwiderstande 22 (entsprechend 136) enthält. Die Referenzwiderstande 22 besitzen die gleiche Bauart (gleiches Material, gleiche Geometrie) wie die Meßwiderstände 21, wobei sie jedoch bei der ersten Ausführungsform so anzuordnen sind, daß sich ihre Temperatur druckunabhängig einstellt. Die Referenzwiderstände können aber vorzugsweise auch so eingerichtet sein, daß sie einen größeren Widerstandswert als die Meßwiderstande besitzen. Der größere Widerstandswert ergibt sich aus den folgenden Uberlegungen.

Durch Anlegen der Brückenversorgungsspannung $U_{ac}$ erhöht sich der Widerstand (R) des Meßwiderstands um $\Delta R_{Mess} = (\alpha/2) \cdot (\tau/c) \cdot U_{eff}^2$ ($U_{eff}$ = Effektivwert von $U_{ac}$, $\alpha$ = Temperaturkoeffizient, $\tau$ = Zeitkonstante der Meßfolie, c = Wärmekapazität der Meßfolie). Da die Referenzwiderstände durch das Gehäuse auf Gehäusetemperatur festgehalten werden, ändert sich ihre Temperatur und somit ihr Widerstandswert nicht ($\Delta R_{Ref}$ = 0) . Durch $\Delta R_{Mess}$ wird die Brücke so stark verstimmt, daß sie schlecht oder gar nicht abgeglichen werden kann. $\Delta R_{Ref}$ wird daher entsprechend der konkreten Bedingungen um $\Delta R_{Mess}$ definiert größer gewählt, so daß die Brücke bei Anlegen von $U_{eff}$ symmetrisch wird. $\tau$ kann dabei numerisch berechnet werden.

Die Brückenschaltung gemäß Fig. 2 wird mit einer Wechseispannung $U_{ac}$ und Lock-in-Technik (f bis zu 100 kHz) betrieben. Bei der dargestellten Ausfuhrungsform werden zwei Paare von Meßund Referenzwiderständen 21, 22 gegeneinander betrieben. Es ist jedoch auch möglich, ein Paar aer Meß- und Referenzwiderstände durch feste Bezugswiderstände zum Bruckenabgleich zu ersetzen. Die Amplitudenmodulation $\Delta U_B$ der sinusförmigen Brückenausgangsspannung $U_B$ weist eine große Druckabhängigkeit ($d\Delta U_B/dp$ maximal) bei minimaler Temperaturabhangigkeit $d\Delta U_B/dT$ auf. Gemäß einer ersten Meßprozedur wird den Widerständen der Brückenschaltung mit der Betriebsspannung $U_{ec}$ eine konstante Heizleistung (zeitlich periodischer, z.B. sinusförmiger Heizstrom) zugeführt und der Druck aus der gemessenen Brückenausgangsspannung $\Delta U_B$ unter Berücksichtigung einer entsprechenden Kalibrierung erfaßt.

Alternativ ist es möglich, jeden Meßwiderstand 21 bzw. Referenzwiderstand 22 (s. zweite Ausführungsform) neben der direkten Heizung jeweils mit einem zusätzlichen Heizwiderstand 23 indirekt zu beheizen (Fig. 1: Meßwiderstand 131, Heizwiderstand 135), um den jeweiligen Wärmestrom von den Meßwiderständen zum Medium durch die indirekte Heizung teilweise oder ganz zu kompensieren. Bei dieser Meßprozedur werden die Heizwiderstände 23 mit einem veränderlichen Strom derart beaufschlagt, daß die Brückenausgangsspannung $\Delta U_B$ konstant ist. Die Heizleistung der Heizwiderstände 23 ist dann wiederum ein direktes Maß für den Wärmetransport von den Meßwiderständen zum zu messenden Gas und somit für den Gasdruck.

Neben dem Feedback-Betrieb des Manometers dient der Heizwiderstand ferner dem Nullabgleich der Brücke und/oder der Kompensation von Störsignalen, Drifterscheinungen oder Aufheizeffekten durch radioaktive Strahlung ("nukleare Heizung"). Der Feedback-Becrieb ermöglicht es, die spektrale Bandbreite des Systems (Frequenzabhängigkeit) zu erhöhen. Der Empfindlichkeitsverlust wird durch die Lock-in-Technik kompensiert. Die Rückkopplung wird dadurch erzielt, daß die Heizleistung des Heizwiderstands 23 am Meßwiderstand 21 bzw. Referenzwiderstand 22 (s. zweite Ausführungsform) proportional zur Brückausgangsspannung $\Delta U_B$ gewählt wird. Der Proportionalitätsfaktor kann selbst frequenzunabhängig oder frequenzabhängig gewählt werden. Mit einem frequenzabhängigen Proportionalitätsfaktor bei der Feedback-Regelung ergibt sich der Vorteil, daß ein Empfindlichkeitsabfall für Frequenzen oberhalb der Grenzfrequenz vermieden wird.

Die Kalibrierung der Meßbrücke erfolgt gegebenenfalls gasspezifisch, da jede Gasart eine spezifische Teilchenbeweglichkeit und somit eine spezifische Wärmeleitung aufweist. Die Erfassung der amplitudenmodulierten Brückenausgangsspannung $\Delta U_B$ erfolgt vorzugsweise mit Lock-in-Technik. Es ist jedoch alternativ auch möglich, die Brukkenschaltung mit Gleichspannung zu betreiben.

Fig. 3 zeigt ein Beispiel für die Abhängigkeit für die Brükkenausgangsspannung $\Delta U_B$ vom zu messenden Gasdruck für zwei verschiedene Manometer (I, II). Die Messungen erfolgten mit Luft als Arbeitsgas.

Der Aufbau einer Druckmeßvorrichtung gemäß Fig. 1 kann beispielsweise durch die folgenden Materialien und Dimensionen realisiert werden. Die Trägerfolie 11 besteht aus einem isolierenden Material, vorzugsweise aus Glimmer (Muskovit). Ersatzweise ist auch der Einsatz einer Diamantfolie möglich, die eine extrem hohe Wärmeleitfähigkeit besitzt. Die Trägerfolie 11 kann auch aus elektrisch leitfähigem Material, vorzugsweise aus Si-Wafermaterial, Edelstahl oder Nickel, bestehen, wobei in diesem Fall die Folienseite, die die Widerstände und Verbindungsleiter trägt, mit einer isolierenden Zwischenschicht zu versehen ist. Die Dicke der Trägerfolie 11 beträgt rund 15 µm. Generell wird die Trägerfolie 11 vorzugsweise durch ein stabiles, ebenes, auch bei hohen Temperaturen nicht dehnbares Material gebilde. Das Material der Trägerfolie soll insbesondere eine derart plane Oberfläche aufweisen, daß die Tiefen der Ausnehmungen 122 bzw. 133 (minimal 15 um bzw. 1 µm) reproduzierbar ausgebildet werden können. Diese Voraussetzungen werden besonders gut durch die Glimmerfolie realisiert.

Die Wärmeleitschicht 123 besteht vorzugsweise aus Gold. Die Dicke der Wärmeleitschicht 123 bestimmt die Empfindlichkeit der Druckmessung, da die Wärmeleitschicht 123 eine definierte Wärmesenke darstellt und somit die Temperatur der Absorberschicht 124 im wesentlichen durch die Dicke der Wärmeleitschicht 123 festgelegt ist. Da der Wärmestrom in das Gas proportional zum Temperaturgradienten gegenüber dem Sensor (insbesondere Absorber) ist, wird vorzugsweise bei einer hohen Temperatur der Absorberschicht 124 gemessen. Die Temperatur kann durch Erhöhung der dem Meßwiderstand 131 zugeführten elektrischen Leistung, durch Verringerung der Schichtdicke der Wärmeleitschicht 123 oder durch eine Vergrößerung der Flächenausdehnung der Wärmeleitschicht 123 erzielt werden. Die Dicke der Wärmeleitschicht 123 beträgt beispielsweise 0,2 µm. Die Wärmekontaktschicht 121 besteht vorzugsweise aus Gold konstanter Dicke und bedeckt außer im Bereich der Wärmeleitschicht 123 die gesamte Vorderseite der Trägerfolie.

Die Absorberschicht 124 ist nicht zwingend erforderlich, wird jedoch zur Erzielung einer hohen Empfindlichkeit der Druckmessung bevorzugt. Die Absorberschicht 124 ist dazu eingerichtet, einen guten Wärmekontakt mit dem angrenzenden Gas zu bilden. Hierzu besitzt die Absorberschicht 124 vorzugsweise eine mikroskopisch rauhe Oberfläche. Anstelle der separaten Absorberschicht 124 kann auch eine entsprechende Oberflächen behandlung an der Warmeleitschicht 123 vorgesehen sein.

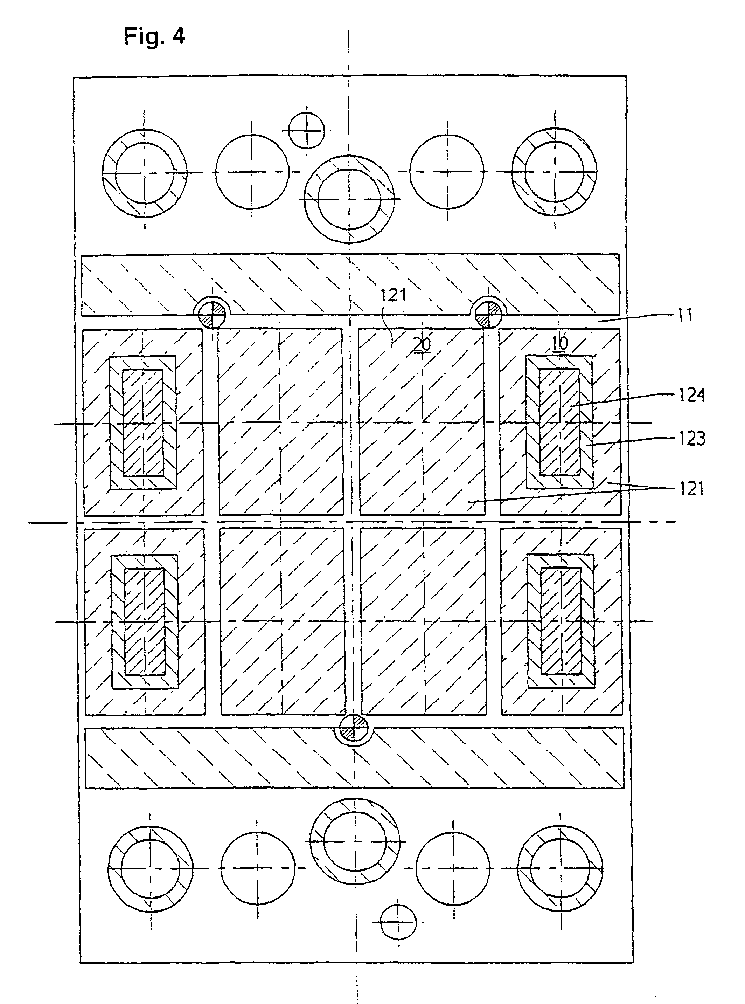

Die Dicke der Meß- und Referenzwiderstandsschichten 131, 136 auf der Rückseite der Trägerfolie 11 betragt rund 0,02 µm. Die Dicke der Schicht mit den Verbindungsleitungen 132 beträgt rund 1 µm. Aufgrund dieses Dickenunterschiedes wird abweichend von der schematischen Darstellung in Fig. 1 im Bereich der Meß- und Referenzwiderstände 131, 136 beim Übergang zur Verbindungsleiterschicht 132 eine Stufenform ausgebildet. Dadurch ist es möglich, auf die gesondert ausgearbeitete Ausnehmung 133 im Gehäuse 14 zu verzichten und den Kanal 142 vollständig durch die Rückseite des Gehäuses 14 bis zum Meßwiderstand zu führen. Ein Beispiel für die Trägerfolienbeschichtung wird unten unter Bezug auf die Fign. 4 bis 6 beschrieben.

Obwohl der geheizte Meßwiderstand bei der erfindungsgemäßen Druckmeßvorrichtung großflächig ausgeführt ist, wird dadurch der meßbare Druckbereich zu hohen Drucken hin nicht beschränkt. Der Schichtaufbau und die extrem ebene Oberfläche der Trageroberfläche 11 ermöglichen die Realisierung eines extrem geringen Abstandes einerseits zwischen dem Absorber 124 und der gegenüberliegenden Gehäusewand (rd. 10 µm) und andererseits zwischen der Rückseite des Meßwiderstands (gegebenenfalls mit Isolationsschicht und Heizwiderstand) zur gegenüberliegenden Gehäusewand in der Ausnehmung 133 (bis 1 µm). Die Relation dieses Abstandes zur mittleren freien Weglänge der Teilchen im Gas legt die obere Druckgrenze fest.

Die Gestaltung erfindungsgemäßer Druckmeßvorrichtungen im Bereich der Wärmeleitschicht und gegebenenfalls der Absorberschicht bestimmt die Ansprechzeit der Druckmessung. Falls keine Absorberschicht vorgesehen ist und die Wärmeleitschicht eine Strukturierung trägt, die den Wärmeübergang fördert (z.B. Rauhigkeit), so ist die Ansprechzeit der Druckmessung geringer als bei einem Aufbau, bei dem die Wärmeleitschicht eine unstrukturierte, homogene Oberfläche aufweist, die mit einer Absorberscnicht versehen ist. Eine Struksurierung der Oberfläche der Wärmeleitschicht kann so eingerichtet sein, daß der Zeitverlauf der Wärmeableitung (beispielsweise bei Anlegen eines Druckimpulses) zur Wärmekontaktschicht durch genau eine Exponentialfunktion mit einer Zeitkonstante beschreibbar ist.

Gemäß einer bevorzugten Realisierung ist ein erfindungsgemaßes Wärmeleitungsmanometer mit einer Vielzahl von Druckmeßvorrichtungen gemäß Fig. 1 versehen. Der Schichtaufbau ermöglicht eine Matrix- oder Array-Anordnung, die je nach den Meßanforderungen miniaturisierbar ist. Es kommt lediglich darauf an, daß der Abstand zwischen den Meß- und Referenzwiderständen genügend groß ist, so daß keine druckabhängige Beeinflussung der Referenzwiderstande stattfindet. In Fig. 4 ist eine vergrößerte Draufsicht auf eine erfindungsgemäß beschichtete Trägerfolie 11 dargestellt. Die Außenmaße der Folie mit den Ausrichtungs- und Anschlußbereichen am Rand betragen 2 * 3 cm$^2$. Auf der Trägerfolie 11 sind Sensoreinheiten 10 mit Wärmekontaktschichten 121, Wärmeleitschichten 123 und Absorberschichten 124 aufgebracht. Die Absorberschicht kann auch die ganze Wärmeleitschicht bedecken. Jeder der dargestellten Sensoreinheiten ist jeweils eine Referenzeinheit 20 zugeordnet. Im Bereich der Referenzeinheiten 20 ist im Unterschied zu den Sensoreinheiten 10 lediglich eine Wärmekontaktschicht 121 vorgesehen.

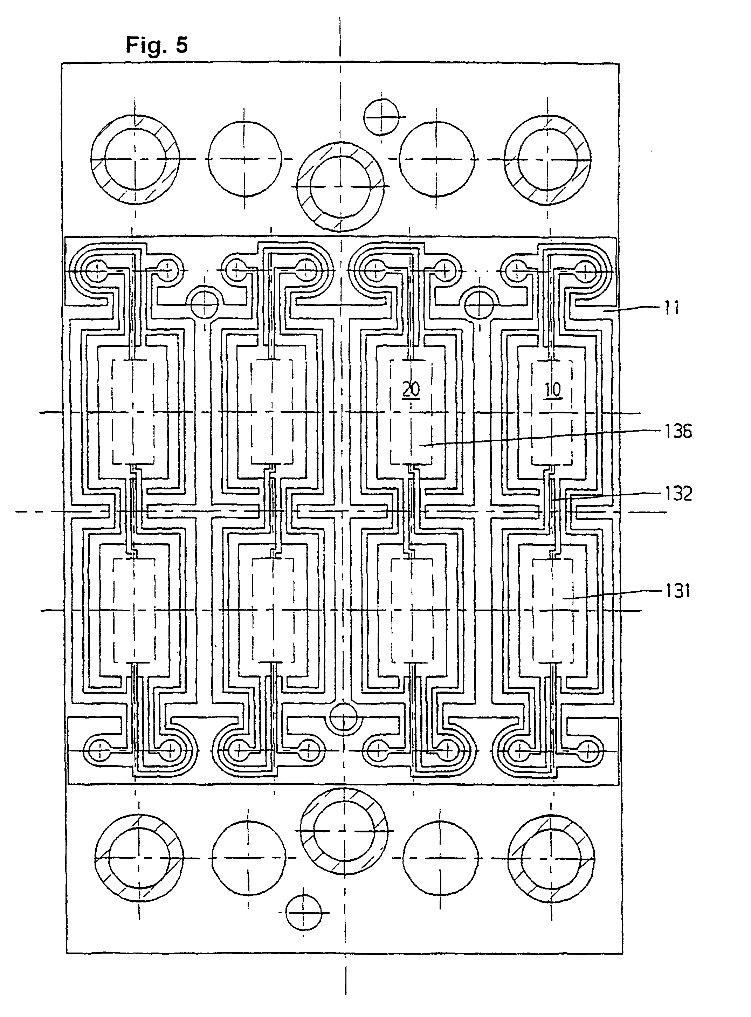

Auf der Rückseite der Trägerfolie 11 sind gemaß Fig. 5 jeweils entsprechend gegenüber zu den Sensor- und Referenzeinheiten 10, 20 die Meß- und Referenzwiderstandsschichten 131, 136 mit den in der Folienebene dazwischen angeordneten Verbindungsleitern 132 vorgesehen.

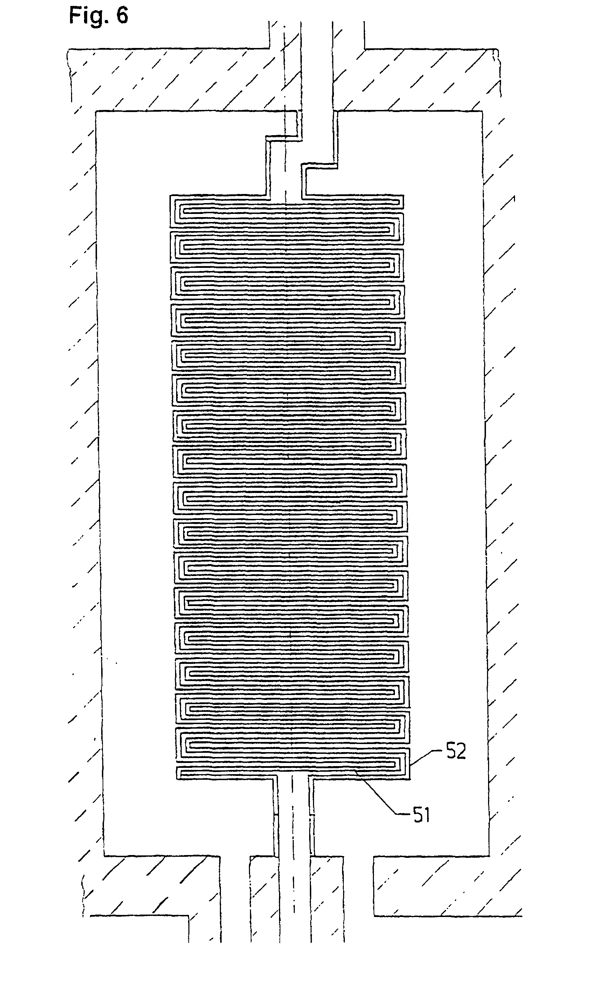

Jede Meß- und Referenzwiderstandsschicht 131, 136 in Fig. 5 umfaßt vorteilhafterweise jeweils zwei Meß- bzw. Referenzwiderstände, die mäanderförmig, ineinander geschachtelt auf der Folie angebracht sind. Damit bildet jedes Paar von Sensor- und Referenzeinheiten 10, 20 (mit den jeweiligen Leitungsverbindungen) eine vollständige Meßbrucke gemaß Fig. 2, wobei zwei Meßwiderstände in der Sensoreinheit 10 und zwei Referenzwiderstände in der Referenzeinheit 20 vorgesehen sind. Eine Mäanderform der Meß- und Referenzwiderstände ist in Fig. 6 vergrößert beispielhaft dargestellt.

Gemäß Fig. 6 sind jeweils zwei Meß- oder Referenzwiderstande 51, 52 schichtförmig auf der Rückseite der Trägerfolie ausgebildet. Jeder Widerstand umfaßt eine Vielzahl von mäanderförmig angeordneten Widerstandselementen, deren Breite wesentlich geringer als die Breite der Verbindungsleitungen zwischen den Widerständen ist. Die ineinander verschachtelten Mäander 51, 52 besitzen den Vorteil, daß die erfindungsgemaße Druckvorrichtung störungsfrei auch in starken Magnetfeldern betrieben werden kann, da jeweils zwei benachbarte Leiter eine entgegengesetzte Stromrichtung aufweisen. Damit heben sich Kräfte im Magnetfeld gegenseitig auf. Dies stellt einen besonderen Vorteil gegenüber herkömmlichen Pirani-Manometern dar, die allgemein in starken Magnetfeldern nicht einsetzbar sind. Die Mäanderverschachtelung bewirkt ferner, daß die beiden Meßwiderstände die Temperatur an demselben Folienbereich messen. Entsprechendes gilt für die Referenzwiderstände. Schließlich werden durch die Mäanderform die Flächen der Leiterschleifen minimiert.

Ein Wärmeleitungsmanometer mit einer matrixartigen Sensoranordnung kann als biegsame Manometerfolie aufgebaut sein. Diese wird entsprechend einem erfindungsgemäßen Verfahren zur Erfassung von Druckprofilen in einem Rezipienten in dem interessierenden Gebiet aufgespannt.

Die Fign. 7A-7D zeigen verschiedene Gestaltungen der Wärmeleitschicht einer erfindungsgemäßen Druckmeßvorrichtung. Bei einer homogenen Wärmeleitschicht gemäß Fig. 7A ohne eine Zusatzbeschichtung werden durch einen Druckimpuls mehrere Moden mit unterschiedlichen Temperaturverteilungen auf der Wärmeleitschicht 123 angeregt. Jede Mode hat eine eigene Zeitkonstante und Amplitude. Die Grundmode hat die größten Werte der Zeitkonstante und Amplitude. Mit höherer Modenzahl nehmen diese Werte stark ab. Die Ein- und Ausschaltantworten der Druckmeßvorrichtung bei einem Druckimpuls wird dann durch eine Uberlagerung einer Vielzahl von Zeitkonstanten beschrieben. Dies ist auch bei einer Anordnung einer homogenen Wärme leitschicht und einer homogenen Absorberschicht über der gesamten Wärmeleitschicht gemäß Fig. 7B der Fall.

Zur Vereinfachung des Zeitverhaltens der Ein- und Ausschaltantworten der Druckmeßvorrichtung kann eine Strukturierung der wärmeleitschicht derart eingeführt werden, daß die Impulsantwort in guter Näherung mit einer Zeitkonstante beschrieben wird. Als Strukturierung der Warmeleitschicht kann beispielsweise eine Warmeausgleichsschicht 125 gemäß Fig. 7C vorgesehen sein. Die Wärmeausgleichsschicht 125 besitzt eine größere Dicke als die Wärmeleitschicht 123 (Faktor: 50...100). Bevorzugte Parameter bei Annahme von Seitenlängen a = 0.1 cm und b = 0.3 cm der Wärmeleitschicht 123 (s. oben) sind Seitenlängen c = 0.4 cm und d = 0.2 cm der Wärmeausgleichsschicht 126 mit einem Dickenverhältnis von ~ 100.

Die Wärmeausgleichsschicht 125 besteht vorzugsweise wie die Wärmeleitschicht aus Gold. Die Anordnung der Wärmeausgleichsschicht 125 erfolgt gegenüber dem Meßwiderstand in der Mitte der Wärmeleitschicht 123. Die Wärmeausgleichsschicht 125 bewirkt, daß niedere Moden unterdrückt und nur höhere Moden (s. oben) angeregt werden, wobei die Änderung der Zeitkonstante bei Änderung der Modenzahl nur gering ist. Der Wert $d\tau/dN$ ($\tau$ = Zeitkonstante der Mode mit der Modenzahl N) ist gering. Damit kann die Impulsantwort durch eine einzelne Zeitkonstante beschrieben werden, was insbesondere bis zu einer Anstiegsoder Abfallzeit des Druckimpulses $\geq$ 1 ms gilt. Die Ermittlung konkreter Quer- und Längs-Seitenlängen und der Dickenverhältnisse erfolgt mit Methoden der numerischen Simulation durch Optimierung des Wärmeleitverhaltens in Bezug auf eine einzige Expotentialfunktion. Die Großen der Wärmeausgleichsschicht 125 und der Meßwiderstandsschicht 131 (Flachenausdehnung) sollten möglichst gleich sein.

Entsprechend einer weiteren Alternative ist auf der Wärmeausgleichsschicht 125 die Absorberschicht 124 vorgesehen, wie es in Fig. 7D gezeigt ist.

Die Fign. 7A-7D zeigen ferner, daß die Ausnehmung 122 in der Wärmekonstaktschicht 121 (bzw. die Flächenausdehnung der Wärmeleitschicht 123 größer als die Ausdehnung des Meßwiderstandes 131 sein kann.

### 2. Ausführungsform

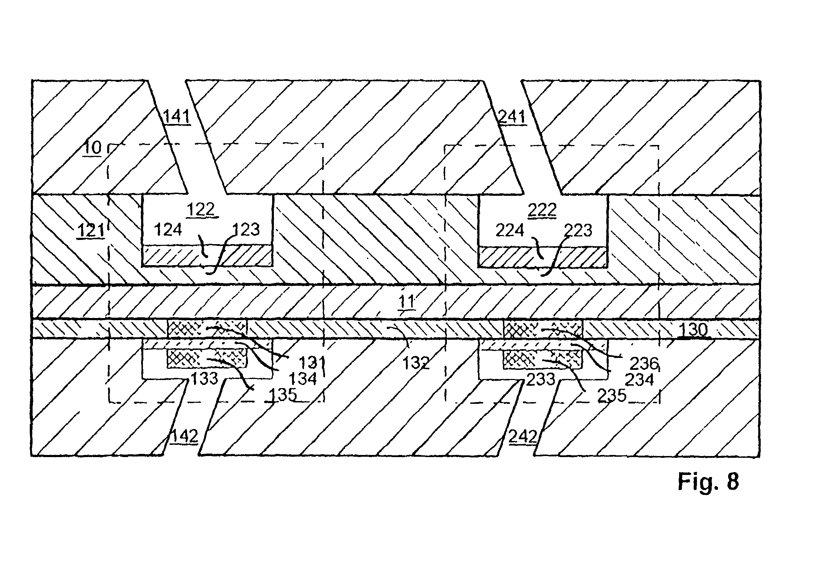

Fig. 8 zeigt schematisch einen Querschnitt durch die zweite Ausführungsform der erfindungsgemäßen Druckmeßvorrichtung. Für das Sensorteil 10, die Erfassung des Widerstandswertes des Meßwiderstands, die Array-Anordnung einer Vielzahl von Sensorelementen und die Verfahrensweisen zum Einsatz der Druckmeßvorrichtung gilt die obige Beschreibung der ersten Ausführungsform entsprechend. Im Unterschied zur ersten Ausführungsform sind bei der zweiten Ausführungsform sind jedoch für jedes Meß- und Referenzwiderstands-Paar zwei freitragende Trägerfolienbereiche (Meß- und Referenzträgerfolie) vorgesehen, so daß sowohl der Meß- als auch der Referenzwiderstand in Wärnekontakt mit dem zu messenden Medium oder Arbeitsgas treten kann. Es wird hier nur das Referenzteil 20 beschrieben, das wie folgt analog zum Sensorteil 10 aufgebaut ist. Wie unten gezeigt wird, bilden bei der zweiten Ausführungsform sowohl der Meß- als auch der Referenzwiderstand funktionsgemäß Meßwiderstände (jeweils mit verschiedenen Temperaturverhalten), wobei im folgenden aus Klarheitsgrunden die Bezeichnung Meßwiderstand bzw.

Referenzwiderstand fortgeführt wird.

Am Sensorteil 20 (s. Fig. 8) ist der Schichtaufbau bestehend aus der Trägerfolie 11, dem Referenzwiderstand 136, der Wärmeleitschicht 223 mit der angrenzenden Wärmekontaktschicht 121 im Gehäuse 14 eingefaßt. Es können ferner (wie beim Sensorteil 10 fakultativ) als weitere Beschichtungen die Absorberschicht 224, eine Isolationsschicht 234 und ein Heizwiderstand 235 vorgesehen sein. Das Gehäuse besitzt auf der Vorderseite einen Gasdurchlaß- oder Belüftungskanal 241, über den das zu messende Medium in die Ausnehmung 222 eintreten kann, die durch die Verjungung der Warmeleitschicht 223 (bzw. der Wärmeleit- und Absorberschichten) gegenüber der Wärmekontaktschicht 121 gebildet wird. Auf der Rückseite besitzt das Gehäuse 14 eine Ausnehmung 233 mit einem weitere 3elüftungskanal 242 analog zur Ausnehmung 123 des Sensorteils.

Die Dicke der Wärmeleitschicht 223 des Referenzteils 20 ist um einen vorbestimmten Faktor (> 1) größer als die Dicke der Wärmeleitschicht 123 des Sensorteils 10. Der Faktor liegt vorzugsweise im Bereich von 3-10, z.B. im Bereich von 4-5. Im letzteren Fall ergibt sich z.B. bei einer Dicke der Meß-Wärmeleitschicht 123 von rund 0,1 bis 0,5 μm eine Dicke der Referenz-Wärmeleitschicht von rund 0,4 bis 2,5 μm.

Der Aufbau mit einem freiliegenden Referenzteil besitzt den besonderen Vorteil, daß Temperaturdrifterscheinungen kompensierbar sind. Insbesondere beim Betrieb der Druckmeßvorrichtung bei relativ hohen Temperaturen (z. B. 200...500 °C) oder infolge nuklearer Bestrahlung am Einsatzort können sich die Widerstandskoeffizienten der Meß- und Referenzwiderstände (ggf. nicht-linear) ändern. Da für eine verschwindende Temperaturdrift $\Delta U_B$ ($d\Delta U_B/dT=0$) für die Widerstandswerte $R_M$ (Meßwiderstand) und $R_R$ (Referenzwiderstand) in einer Brückenschaltung der Zusammenhang

$$[R_M(T_M) / R_R(T_R) = f(\alpha) \, [R_M(T_O) / R_R(T_O)]$$

($T_M$: Temperatur des Meßwiderstands, $T_R$: Temperatur des Referenzwiderstands, $T_0$: Bezugstemperatur) gilt, können durch das Freiliegen des Referenzteils die Temperatur des Referenzwiderstandes verändert und somit Temperaturdrifterscheinungen kompensiert werden. Durch die Einstellung der Wärmeleitschicht 223 des Referenzteils 20 mit einer gegenüber der Wärmeleitschicht 123 des Sensorteils 10 abweichenden Dicke kann die Druckabhängigkeit der Referenzwiderstandstemperatur berücksichtigt werden.

Bei einer bevorzugten Gestaltung wird die Temperatur der W1derstände 131, 136 durch gesonderte Heizwiderstände 135 bzw. 235 eingestellt. Dies erlaubt eine Temperaturregelung unabhängig von der Versorgungsspannung der Brückenschaltung. So ist es möglich, den Heizkreis (Heizwiderstände 23 in Fig. 2), niederfrequent (z.B. ~ 1 kHz) und den Brückenmeßkreis hochfrequent (~ 10 kHz bis 100 kHz, vorzugsweise bei 50 kHz) zu betreiben. Die separate Heizung der Meß- und Referenzwiderstände besitzt den zusätzlichen Vorteil, daß die thermische Entkopplung zwischen dem Sensorteil 10 und dem Referenzteil 20 verbessert wird. Bei einer erfindungsgemäßen Druckmeßvorrichtung wird ein thermisches Übersprechen zwischen den Sensor- und Referenzteilen im Rahmen der erzielten Genauigkeit der Druckmessung ausgeschlossen.

Die Schichtaufbauten im Sensor- bzw. Referenzteil 10, 20 besitzen vorzugsweise die gleichen Querabmessungen, d.h. die gleichen Flächen- bzw. Volumenausdehnungen in einer Richtung parallel zu den Schichtebenen. Die Trägerfolie 11, die im Bereich der Ausnehmungen jeweils des Sensor- bzw. Referenzteils 10, 20 auch als Meß- bzw. Referenzfolie betrachtet werden kann, besteht vorzugsweise wie bei der ersten Ausfuhrungsform aus Glimmer oder aus einer mit einem Isoliermaterial beschichteten Metailfolie (z.B. aus Stahl, Nickel, Titan oder anderen Metallen). Die Trägerfolie 11 ist mit der Wärmekontaktschicht 121 beschichtet, die z.B. aus einer Goldschicht besteht (Dicke bis zu 20 μm). Durch diese zusätzliche Beschichtung wird die Trägerfolie selbsttragend, was besonders vorteilhaft für die Anbringung eines *Arrays* von vielen Drucksensoren auf dem selbsttragenden Aufbau ist. Als Einfassung oder Gehäuse ist dann eine gutwarmeleitende Halterung 14, die vorzugsweise aus Metall besteht, vorgesehen, die der Druckmeßvorrichtung eine genügende Robustheit verleiht.

Die Meß- bzw. Referenzwiderstande werden bei der Herstellung der Druckmeßvorrichtung gleichzeitig, vorzugsweise in Maanderform ausgebildet. Dadurch besitzen die Widerstande identische Eigenschaften. Vier identische, temperaturabhängige Mäanderwiderstände bilden zusammen mit den Verbindungsleitungen 132 (s. Fig. 1, 8) eine komplette Wheatstone'sche Meßbrücke. Zwei Widerstände sind auf der Meßfolie und zwei Widerstände sind auf der Referenzfolie durch Sputtern, Aufdampfen oder Galvanisieren in einem Arbeitsgang aufgebracht. Dadurch ergibt sich in Bezug auf alle physikalischen Parameter, wie z.B. den Widerstandswert, den Temperaturkoeffizienten, den Wärmeleitungskoeffizienten, Kapazitäten und Induktivitäten eine hohe Brückensymmetrie. Die Wärmeleitschichten auf den den Widerstandsschichten gegenüberliegenden Oberflächen der Meß- bzw. Referenzfolie besitzen über die jeweilige Schichtfläche eine konstante Dicke und bestehen aus einem gut warmeleitenden Material, vorzugsweise aus Gold. Die Dicke der Wärmeleitschicht 223 ist wesentlich größer als die Dicke der Wärmeleitschicht 123. Je nach Gestaltungsform befindet sich mittig auf einer oder beiden Wärmeleitschichten eine weitere, wesentlich dickere, gut wärmeleitende Schicht, die als Absorberschicht funktioniert. Zur Erzielung eines bestimmten Wärmeleitungsverhaltens des Gesamtaufbaus wird die Absorberschicht vorzugsweise rechteckig mit bestimmten Längs- und Querabmessungen ausgebildet, die in folgender Weise zu den Längs- und Querabmessungen der darunterliegenden Wärmeleitschicht (und somit zu den Abmessungen der jeweiligen freiliegenden Sensorfläche) in Beziehung steht. Hierbei werden alle geometrischen Parameter der Wärmeleit- und Absorberschichten entsprechend den Gesetzen der Wärmeleitung wie folgt berucksichtigt.

Die Wärmeleitschichten gehen am Rand der freiliegenden Sensorflächen in die Wärmekontaktschicht 121 über. Die durch die Dickendifferenz zwischen der Wärmekontaktschicht und der Wärmeleitschicht (eventuell mit Absorberschicht) entstehende Ausnehmung (122 bzw. 222) wird abgesehen von dem Durchlaßkanal 141 bzw. 241 von der Halterung 14 geschlossen. Die freie Höhe der Ausnehmung, d.h. der Abstand zwischen der Unterseite der Folienhalterung und der Oberfläche der Wärmeleit- bzw. Absorberschicht beträgt vorzugsweise 10 μm oder weniger.

Die Heizwiderstände 135 bzw. 235 werden durch vom Meßkreis unabhängige Strom- oder Spannungsquellen gespeist. Entsprechend den obigen Erläuterungen erlauben die Heizwiderstände eine Unterdrückung der Temperaturdrift über den gesamten Druckbereich von $10^{-5}$ bis $10^3$ mbar bei druckabhängiger Regelung der Heizströme. Störsignale, die beispielsweise durch nukleare Heizung bei Einsatz in einem Fusionsreaktor ergeben, lassen sich vollständig kompensieren. Die rückgekoppelte Heizung der Sensorfolien (Feedback-Betrieb) wird vorzugsweise mit einer zeitabhängigen Gegenkopplung realisiert. Die Gegenkopplung ist bei sich langsam ändernden Drucksignalen größer als bei sich schnell ändernden Drucksignalen. Dadurch wird das integrierende Verhalten der Sensorfolie, das für herkömmliche Folienmanometer charakteristisch ist, kompensiert. Außerdem lassen sich auch schnelle Druckänderungen (im Bereich von 1 ms) mit hoher Empfindlichkeit messen.

Weitere Vorteile

Erfindungsgemäße Druckmeßvorrichtungen besitzen die folgenden Vorteile. Die Druckmeßvorrichtungen besitzen eine besonders hohe Kompaktheit und Stabilität, so daß sich insbesondere eine hervorragende Eignung für plasmaphysikalische Experimente ergibt. Es besteht eine geringe Empfindlichkeit gegen Gaseinbruche. Die Meßvorrichtungen sind in Lock-in-Technik mit variabler Trägerfrequenz betreibbar. Der Wechselstrombetrieb hat den zusätzlichen Vorteil, daß durch den periodischen Stromrichtungswechsel strombedingte Materialanderungen vermieden werden. Der gesamte Aufbau ist hochvakuumtauglich. Ein besonderes Anflanschen an Rezipienten ist nicht erforderlich. Der Schichtaufbau ermöglicht einen besonders guten Wärmekontakt mit dem zu messenden Gas, so daß in größeren Druckbereichen und mit erhöhter Genauigkeit gemessen werden kann. Die Druckmessung kann in einem Bereich von atmosphärischem Druck bis hin zu Hochvakuum (rd. $10^{-5}$ Torr) erfolgen. Im Vergleich beispielsweise zu Ionisationsvakuummetern ergibt sich ein erheblich verringerter Stromverbrauch. Erfindungsgemäße Druckmeßvorrichtungen sind in allen Bereichen der Vakuumtechnik und in Kombination mit Strahlungsmeßgeräten (Bolometern) einsetzbar.

Weitere Vorteile der Erfindung bestehen in der Einsetzbarkeit der Druckmeßvorrichtung bei hohen Magnetfeldern (ohne jede Einschränkung bis zu 10 T) . Die Druckmeßvorrichtungen sind bis 500 °C aufheizbar, wobei der Meßeinsatz bei bis zu 300 °C erfolgt. Bei dem genannten großen Meßbereich wird eine außerordentlich hohe Zeitauflösung von bis zu 1 ms erzielt.

Die Anbringung einer gesonderten Wärmeleitschicht auf der Trägerfolie besitzt den Vorteil, daß die Zeitkonstanten der Wärmeableitung über die geometrischen Parameter der Wärmeleitschicht (z.B. Dicke einer Au-Schicht) genau einstellbar sind. Die Ausbildung der Trägerfolie als Wärmeleitschicht ist zwar bei einer genügend hohen Wärmeleitung möglich. So erlaubt der Einbau einer Diamantfolie als Trägerfolie die Wärmeleitung zum Gehause. Dies hat jedoch den Nachteil, daß die Dicke einer solchen Diamantfolie schwer einstellbar ist und daß im Einsatz Aufladungserscheinungen nach hochenergetischer Bestrahlung auftreten können.

**Patentansprüche**

1. Druckmeßvorrichtung mit mindestens einem elektrisch heizbaren Meßwiderstand (131), der schichtförmig auf einer Trägerfolie (11) angeordnet ist und dessen Widerstandswert vom Druck eines Mediums abhangt, mit dem der Meßwiderstand (131) in Wärmekontakt steht,
   **dadurch gekennzeichnet, daß**
   die Trägerfolie (11) eine Meß-Wärmeleitschicht (123) aufweist oder bildet, die von einem Wärmestrom vom Meßwiderstand (131) zum Medium im wesentlichen senkrecht durchsetzt wird und in Verbindung mit einer als Wärmebad mit hoher Wärmekapazität ausgebildeten Wärmekontaktschicht (121) steht.

2. Druckmeßvorrichtung gemäß Anspruch 1, bei der die Wärmekontaktschicht (121) auf der zum Meßwiderstand (131) entgegengesetzten Seite der Trägerfolie (11) vorgesehen ist und in einem Bereich gegenuber dem Meßwiderstand (131) in die Meß-Wärmeleitschicht (123) übergeht, deren Dicke geringer als die Dicke der Warmekontaktschicht (121) ist, so daß in der Wärmekontaktschicht eine erste Meß-Ausnehmung (122) zur Aufnahme des Mediums gebildet wird.

3. Druckmeßvorrichtung gemäß Anspruch 1 oder 2, bei der auf der Meß-Wärmeleitschicht (123) eine Absorberschicht (124) vorgesehen ist, die mit dem zu messenden Medium in der ersten Meß-Ausnehmung (122) in Kontakt steht.

4. Druckmeßvorrichtung gemäß Anspruch 1 oder 2, bei der die Meß-Wärmeleitschicht (123) eine Oberflächenstrukturierung (125) aufweist, die dazu eingerichtet ist, daß der Zeitverlauf der Wärmeableitung von der Meß-Wärmeleitschicht (123) zur Wärmekontaktschicht (121) durch genau eine Exponentialfunktion mit einer Zeitkonstante repräsentiert wird.

5. Druckmeßvorrichtung gemäß einem der vorhergehenden Ansprüche, bei der auf der Trägerfolie (11) neben dem Meßwiderstand (131) schichtförmig Verbindungsleitungen (132) und mindestens ein Referenzwiderstand (136) angeordnet sind, der vom Meßwiderstand (131) beabstandet ist, wobei die Trägerfolie (11) mit der Wärmekontaktschicht (121) auf der einen Seite und den Widerständen und den Leitungen auf der anderen Seite formschlüssig oder freitragend von einem Gehäuse eingeschlossen ist, das mindestens einen ersten Gasdurchlaßkanal zu der ersten Meß-Ausnehmung (122) aufweist und am Meßwiderstand (131) eine zweite Meß-Ausnehmung (133) mit einem zweiten Gasdurchlaßkanal (142) bildet.

6. Druckmeßvorrichtung gemäß einem der Anspruche 1 bis 4, bei der auf der Trägerfolie (11) neben dem Meßwiderstand (131) schichtformig Verbindungsleitungen (132) und mindestens ein Referenzwiderstand (236) angeordnet sind, der vom Meßwiderstand (131) beabstandet ist, wobei die Wärmekontaktschicht (121) in einem Bereich gegenüber dem Referenzwiderstand (236) in eine Referenz-Wärmeleitschicht (223) übergeht, deren Dicke geringer als die Wärmekontaktschicht (121) ist, so daß in der Wärmekontaktschicht (121) eine erste Referenz-Ausnehmung (222) zur Aufnahme des Mediums gebildet wird.

7. Druckmeßvorrichtung gemäß Anspruch 5, bei der die Dicke der Rererenz-Wärmeleitschicht (223) größer als die Dicke der Meß-Wärmeleitschicht (123) ist.

8. Druckmeßvorrichtung gemäß einem der vorhergehenden Ansprüche, bei der die Dicke der Meß- und Referenzwiderstände geringer als die Dicke der Verbindungsleitungen ist, so daß über damit gebildete Abstufungen die zweite Meß-Ausnehmung und eine zweite Referenz-Ausnehmung (233) gebildet wird.

9. Druckmeßvorrichtung gemäß einem der Anspruche 5 bis 8, bei der der Meßwiderstand und der Referenzwiderstand Teil einer Widerstandsmeßbrücke sind.

10. Druckmeßvorrichtung gemäß Anspruch 9, bei der die Meßbrücke so eingerichtet ist, daß eine Brückenausgangsspannung $U_B$ ein Maß für den Druck im zu messenden Medium ist.

11. Druckmeßvorrichtung gemäß Anspruch 9, bei der der Meßwiderstand und/oder der Referenzwiderstand in Wärmekontakt mit einem Heizwiderstand steht, dessen Heizleistung durch Rückkopplung einer Brückenausgangsspannung $U_B$ so einstellbar ist, daß die Brückenausgangsspannung $U_B$ im wesentlichen konstant ist, wobei die Heizleistung des Heizwiderstands ein Maß für den Druck des zu messenden Mediums ist.

12. Druckmeßvorrichtung gemäß einem der Ansprüche 9 bis 11, bei der die Meßbrucke zum Wechselspannungsbetrieb eingerichtet ist.

13. Druckmeßvorrichtung gemäß einem der vorhergehenden Ansprüche, bei der die Trägerfolie eine Glimmerfolie ist.

14. Druckmeßvorrichtung gemäß einem der vorhergehenden Ansprüche, bei der die Meßwiderstände und Referenzwiderstände durch Leiterstreifen gebildet werden, die schichtförmig, mäanderartig angeordnet sind.

15. Druckmeßvorrichtung gemäß einem der vorhergehenden Ansprüche, bei der eine Vielzahl von Paaren aus Meß- und Referenzwiderständen matrixartig angeordnet sind.

16. Druckmeßvorrichtung gemäß Anspruch 15, bei der die Matrixanordnung ein folienartiges, flexibles Manometer bildet, das zur ortsabhangigen Druckmessung eingerichtet ist.

**17.** Druckmeßvorrichtung gemäß einem der vorhergehenden Ansprüche, bei der auf der Meß-Wärmeleitschicht (123) und/oder der Referenz-Wärmeleitschicht (223) eine Wärmeausgleichsschicht (125) vorgesehen ist, deren Maße so gewählt sind, daß die Wärmeableitung von der Meß- bzw. Referenz-Wärmeausgleichsschicht zur Wärmekontaktschicht im wesentlichen einfach exponentiell ist.

**18.** Druckmeßvorrichtung gemäß Anspruch 17, bei der die Dicke der Wärmeausgleichsschicht (125) größer als die Dicke der Meß- bzw. Referenz-Wärmeleitschicht (123, 223) ist.

**Claims**

**1.** A pressure measuring device with at least one measuring resistance (131) which can be heated electrically, is disposed as a layer on a support foil (11) and whose resistance value depends on the pressure of a medium with which the measuring resistance (131) is in thermal contact, **characterized in that** the support foil (11) comprises or forms a measuring heat conduction layer (123) through which a flow of heat passes substantially perpendicularly from the measuring resistance (131) to the medium and which is coupled to a thermal contact layer (121) forming a heat reservoir of high heat capacity.

**2.** A pressure measuring device according to claim 1, in which the thermal contact layer (121) is provided on the side of the support foil (11) opposite the measuring resistance (131) and merges into the measuring heat conduction layer (123) in a region opposite the measuring resistance (131), wherein the thickness of the measuring heat conduction layer (123) is smaller than the thickness of the thermal contact layer (121), so that a first measuring recess (122) for reception of the medium is formed in the thermal contact layer.

**3.** A pressure measuring device according to claim 1 or 2, in which an absorbing layer (124) is provided on the measuring heat conduction layer (123) and is in contact with the medium to be measured in the first measuring recess (122).

**4.** A pressure measuring device according to claim 1 or 2, in which the measuring heat conduction layer (123) has a surface structuring (125) which is so arranged that the variation with time of heat conduction from the measuring heat conduction layer (123) to the thermal contact layer (121) is represented exactly by an exponential function with a time constant.

**5.** A pressure measuring device according to any of the preceding claims, in which, as well as the measuring resistance (131), connecting lines of layer form (132) and at least one reference resistance (136), which is spaced from the measuring resistance (131), are disposed on the support foil (11), wherein the support foil (11) with the thermal contact layer (121) on the one side and the resistances and the lines on the other side is enclosed in locked-in manner in a housing which has at least one gas passage to the first measuring recess (122) and forms a second measuring recess (133) with a second gas passage at the measuring resistance (131).

**6.** A pressure measuring device according to any of claims 1 to 4, in which, as well as the measuring resistance (131), connecting lines of layer form (132) and at least one reference resistance (136), which is spaced from the measuring resistance (131), are disposed on the support foil (11), wherein the thermal contact layer (121) merges into a reference heat conduction layer (223) in a region opposite the reference resistance (236), wherein the thickness of the reference heat conduction layer (223) is smaller than the thermal contact layer (121), so that a first reference recess (222) for reception of the medium is formed in the thermal contact layer (121).

**7.** A pressure measuring device according to claim 5, in which the thickness of the reference heat conduction layer (223) is greater than the thickness of the measuring heat conduction layer (123).

**8.** A pressure measuring device according to any of the preceding claims, in which the thickness of the measuring and reference resistances is smaller than the thickness of the connecting lines, so that the second measuring recess and a second reference recess (233) are formed by the resulting steps.

**9.** A pressure measuring device according to any of claims 5 to 8, in which the measuring resistance and the reference resistance are part of a resistance measuring bridge.

**10.** A pressure measuring device according to claim 9, in which the measuring bridge is so arranged that a bridge output voltage $U_B$ is a measure of the pressure in the medium to be measured.

11. A pressure measuring device according to claim 9, in which the measuring resistance and/or the reference resistance is in thermal contact with a heating resistance, whose heating power can be so adjusted that a bridge output voltage $U_B$ is substantially constant, wherein the heating power of the heating resistance is a measure of the pressure of the medium to be measured.

12. A pressure measuring device according to any of claims 9 to 11, in which the measuring bridge is arranged for alternating voltage operation.

13. A pressure measuring device according to any of the preceding claims, in which the support foil is a mica foil.

14. A pressure measuring device according to any of the preceding claims, in which the measuring resistance and reference resistance are formed by conductor strips which are disposed in meandering layer form.

15. A pressure measuring device according to any of the preceding claims, in which a plurality of pairs of measuring and reference resistances are arranged like a matrix.

16. A pressure measuring device according to claim 15, in which the matrix arrangement forms a foil-like, flexible manometer which a arranged for position-independent pressure measurement

17. A pressure measuring device according to any of the preceding claims, in which a heat equalising layer (125) is provided on the measuring heat conduction layer (123) and/or the reference heat conduction layer (223), with its dimensions so selected that the conduction of heat from the measuring or reference heat equalising layer to the thermal contact layer is substantially simply exponential.

18. A pressure measuring device according to claim 17, in which the thickness of the heat equalising layer (125) is greater than the thickness of the measuring or reference heat conduction layer (123, 223).

## Revendications

1. Manomètre, doté au moins d'une résistance de mesure chauffable électriquement (131), disposée en strate sur un film support (11) et dont la valeur de résistance dépend de la pression du milieu, avec lequel la résistance de mesure (131) est en contact thermique, **caractérisé en ce que** le film support (11) présente ou forme une couche de mesure conductrice de chaleur (123), qui est parcourue essentiellement dans le sens vertical par un courant thermique à partir, de la résistance de mesure(131) jusqu'au milieu et est reliée à une couche de contact thermique (121) conçue comme bain thermique à forte capacité thermique.

2. Manomètre selon la revendication 1, dans lequel la couche de contact thermique (121) est installée sur le côté opposé à la résistance de mesure (131) du film support (11) et se transforme en une couche de mesure conductrice de chaleur (123) au niveau d'une zone faisant face à la résistance de mesure (131), dont l'épaisseur est inférieure à celle de la couche de contact thermique (121), si bien qu'une première cavité de mesure (122) destinée à accueillir le milieu se forme dans la couche de contact thermique.

3. Manomètre selon la revendication 1 ou 2, dans lequel la couche de mesure conductrice de chaleur (123) est munie d'une couche absorbante (124) qui est en contact avec le milieu à mesurer dans la première cavité de mesure (122).

4. Manomètre selon la revendication 1 ou 2, dans lequel la couche de mesure conductrice de chaleur (123) présente une structure de surface (125) destinée à représenter exactement la durée de dissipation de chaleur à partir de la couche de mesure conductrice de chaleur (123) jusqu'à la couche de contact thermique (121) par une fonction exponentielle dotée d'une constante temporelle.

5. Manomètre selon l'une des revendications précédentes, dans lequel des connexions (132) et au moins une résistance de référence (136), située à une certaine distance de la résistance de mesure (131), sont disposées en strates sur le film support (11) à côté de la résistance de mesure (131), le film support (11) avec la couche de contact thermique (121) d'un côté et avec les résistances et les connexions de l'autre côté étant intégré dans un logement à engagement positif, qui présente au moins un premier canal d'admission des gaz allant vers une première cavité de mesure (122) et, à l'endroit de la résistance de mesure (131), qui forme une deuxième cavité de mesure (133) doté d'un deuxième canal d'admission des gaz.

6. Manomètre selon l'une des revendications 1 à 4, dans lequel des connexions (132) et au moins une résistance de référence (236), située à une certaine distance de la résistance de mesure (131), sont disposées en strates sur le film support (11) à côté de la résistance de mesure (131), la couche de contact thermique (121) se transformant en une couche de référence conductrice de chaleur (223) au niveau d'une zone faisant face à la résistance de référence (236), dont l'épaisseur est inférieure à celle de la couche de contact thermique (121), si bien qu'une première cavité de référence (222) destinée à accueillir le milieu se forme dans la couche de contact thermique (121).

7. Manomètre selon la revendication 5, dans lequel l'épaisseur de la couche de référence conductrice de chaleur (223) est supérieure à celle de la couche de mesure conductrice de chaleur (123).

8. Manomètre selon l'une des revendications précédentes, dans lequel l'épaisseur des résistances de mesure et de référence est inférieure à l'épaisseur des connexions, si bien que, par le biais de niveaux ainsi formés, la deuxième cavité de mesure et une deuxième cavité de référence (233) sont formées.

9. Manomètre selon l'une des revendications 5 à 8, dans lequel la résistance de mesure et la résistance de référence font partie d'un pont de résistances.

10. Manomètre selon la revendication 9, dans lequel le pont est installé de manière à ce que la tension de sortie du pont $U_B$ constitue une mesure pour la pression du milieu à mesurer.

11. Manomètre selon la revendication 9, dans lequel la résistance de mesure et/ou la résistance de référence est en contact thermique avec une résistance chauffante, dont la puissance calorifique est respectivement réglable de manière à maintenir une tension de sortie de pont $U_B$ essentiellement constante, la puissance calorifique de la résistance chauffante constituant une mesure pour la pression du milieu à mesurer.

12. Manomètre selon l'une des revendications 9 à 11, dans lequel le pont est destiné à fonctionner en tension alternative.

13. Manomètre selon l'une des revendications précédentes, dans lequel le film support est un film en mica.

14. Manomètre selon l'une des revendications précédentes, dans lequel les résistances de mesure et les résistances de référence sont formées grâce à des bandes conductrices qui sont disposées en strates, en décrivant des méandres.

15. Manomètre selon l'une des revendications précédentes, dans lequel une multitude de paires de résistances de mesure et de résistances de référence sont disposées à la manière d'une matrice.

16. Manomètre selon la revendication 15, dans lequel la disposition en matrice forme un manomètre flexible à la manière d'une feuille, destiné à mesurer la pression localement.

17. Manomètre selon l'une des revendications précédentes, dans lequel une couche de compensation thermique (125) est installée sur la couche de mesure conductrice de chaleur (123) et/ou la couche de référence conductrice de chaleur (125), dont les dimensions sont choisies de manière à ce que la dissipation de chaleur à partir de la couche de compensation thermique ou de référence jusqu'à la couche de contact thermique soit essentiellement simplement exponentielle.

18. Manomètre selon la revendication 17, dans lequel l'épaisseur de la couche de compensation thermique (125) est supérieure à celle de la couche conductrice thermique de mesure ou de référence (123, 223).

Fig. 1

Fig. 3

Fig. 2

## Fig. 4

## Fig. 5

## Fig. 6

(A) 123 <u>121</u>

131

(B) 123 124 <u>131</u>

131

(C) 123 125 <u>121</u>

131

(D) 124 125 123 <u>121</u>

131

Fig. 7

Fig. 8